(19) Europäisches Patentamt / European Patent Office / Office européen des brevets

(11) **EP 4 568 239 A1**

(12) **EUROPEAN PATENT APPLICATION**
published in accordance with Art. 153(4) EPC

(43) Date of publication:
**11.06.2025  Bulletin 2025/24**

(21) Application number: **23872773.9**

(22) Date of filing: **08.08.2023**

(51) International Patent Classification (IPC):
$H04N\ 17/00$ $^{(2006.01)}$     $H04N\ 23/70$ $^{(2023.01)}$
$H04N\ 23/80$ $^{(2023.01)}$     $G06T\ 5/00$ $^{(2024.01)}$
$G09G\ 5/00$ $^{(2006.01)}$

(52) Cooperative Patent Classification (CPC):
**G06T 5/00; G09G 5/00; H04N 17/00; H04N 23/70; H04N 23/80**

(86) International application number:
**PCT/KR2023/011624**

(87) International publication number:
**WO 2024/071650 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022  KR 20220124631**
**08.11.2022  KR 20220147702**

(71) Applicant: **Samsung Electronics Co., Ltd.**
**Suwon-si, Gyeonggi-do 16677 (KR)**

(72) Inventors:
• **KIM, Jiman**
  **Suwon-si, Gyeonggi-do 16677 (KR)**
• **KANG, Dukjin**
  **Suwon-si, Gyeonggi-do 16677 (KR)**
• **GOO, Bonseuk**
  **Suwon-si, Gyeonggi-do 16677 (KR)**
• **KWON, Ohyun**
  **Suwon-si, Gyeonggi-do 16677 (KR)**
• **PARK, Kyungsoo**
  **Suwon-si, Gyeonggi-do 16677 (KR)**
• **PARK, Sehyeok**
  **Suwon-si, Gyeonggi-do 16677 (KR)**

• **BAEK, Jongheon**
  **Suwon-si, Gyeonggi-do 16677 (KR)**
• **SEO, Sungwon**
  **Suwon-si, Gyeonggi-do 16677 (KR)**
• **SOH, Byungseok**
  **Suwon-si, Gyeonggi-do 16677 (KR)**
• **SHIN, Mirae**
  **Suwon-si, Gyeonggi-do 16677 (KR)**
• **LEE, Weonhee**
  **Suwon-si, Gyeonggi-do 16677 (KR)**
• **LEE, Jongseok**
  **Suwon-si, Gyeonggi-do 16677 (KR)**
• **LEE, Huiman**
  **Suwon-si, Gyeonggi-do 16677 (KR)**
• **JUNG, Seongwoon**
  **Suwon-si, Gyeonggi-do 16677 (KR)**
• **JUNG, Hyeyoung**
  **Suwon-si, Gyeonggi-do 16677 (KR)**
• **CHA, Taehwan**
  **Suwon-si, Gyeonggi-do 16677 (KR)**

(74) Representative: **Walaski, Jan Filip et al**
**Venner Shipley LLP**
**200 Aldersgate**
**London EC1A 4HD (GB)**

(54) **DISPLAY DEVICE FOR ENHANCING UNIFORMITY, ELECTRONIC DEVICE, AND CONTROL METHODS THEREOF**

(57)     A display device is disclosed. The display device may include a communication interface, a display, and at least one processor which is connected to the communication interface and the display and controls the display device, wherein the processor may, on receiving a first pattern image from an electronic device through the communication interface, control the display to display the first pattern image, on receiving a control signal from the electronic device through the communication interface, control the display to display a single-color image based on the control signal, and on receiving correction information for correction of the uniformity of the display device from the electronic device through the communication interface, control the display to display content

based on the correction information.

# FIG. 2

100

**Description**

[Technical Field]

The disclosure relates to a display device, an electronic device, and control methods thereof and more particularly, to a display device for enhancing uniformity, an electronic device, and control methods thereof.

[Background Art]

According to the development of electronic technologies, a display device providing a high image quality is being developed. In particular, a display device having high resolution is recently being developed.

However, each pixel cannot be manufactured perfectly identically depending on the circumstances at the time of manufacturing, and an indicator showing such difference is the uniformity of a display.

To enhance the uniformity of the display, there is a method in which a display device displays one color and each area of the display is measured through measuring equipment to calibrate the display.

Here, the measuring equipment measures each area of the display in a state where correction of a vignetting phenomenon is completed and all of a view angle of a lens and a value of an aperture are fixed. Here, the vignetting phenomenon is a phenomenon in which an outer part or an edge of a photographing result is darkened due to decrease in the amount of light around the lens.

Meanwhile, if the correction of image non-uniformity due to the vignetting phenomenon is not completed or if the view angle of the lens and the value of the aperture are changed, there is a problem that uniformity of the display cannot be measured.

**[Disclosure]**

**[Technical Solution]**

According to an embodiment of the disclosure, a display device includes a communication interface, a display, and at least one processor connected to the communication interface and the display to control the display device, wherein the processor is configured to, based on a first pattern image being received from an electronic device through the communication interface, control the display to display the first pattern image, based on a control signal being received from the electronic device through the communication interface, control the display to display an image of a single color based on the control signal, and based on correction information for correcting uniformity of the display device being received from the electronic device through the communication interface, control the display to display a content based on the correction information.

Also, the display device may further include memory, wherein the processor may store the electronic device transmitting the first pattern image as an electronic device correcting image non-uniformity due to a vignetting phenomenon in the memory, and based on the first pattern image being received from the electronic device through the communication interface, control the communication interface to transmit a signal indicating that the image non-uniformity due to the vignetting phenomenon of the electronic device is corrected based on information stored in the memory to the electronic device or control the display to display a message indicating that the image non-uniformity due to the vignetting phenomenon of the electronic device is corrected.

Meanwhile, an electronic device includes a camera, a display, and at least one processor connected to the camera and the display to control the electronic device, wherein the processor is configured to, while a first pattern image is displayed on a display device, control the display to display a live image photographed by the camera and sequentially move and display a second pattern image corresponding to the first pattern image from a center area to a surrounding area of the display, obtain a luminance value of a preset point of the live image at a time point when the first pattern image included in the live image matches with each of the moved second pattern image as a position of the electronic device is changed, and obtain first correction information for correcting an image photographed by the camera based on the obtained luminance value and a position where the second pattern image is displayed.

Also, the processor may obtain the first correction information based on the position where the second pattern image is displayed such that the obtained luminance value has the same value, and correct a vignetting phenomenon of the image photographed by the camera based on the first correction information.

Further, the processor, based on at least one of differences among the obtained luminance values being equal to or greater than a preset value, may obtain the first correction information based on the obtained luminance value and the position where the second pattern image is displayed.

Also, the first pattern image may include part of a circular pattern of which a center part has a preset luminance value, the second pattern image, the second pattern image may include the other part of the circular pattern, and the processor may obtain a luminance value of the center part of the circular pattern at each matching time point.

Further, the processor may control the display to sequentially move and display the second pattern image from a first point of the center area of the display to a second point of the surrounding area of the display at a preset interval.

Also, the processor, based on the first pattern image included in the live image matching with the second pattern image while the second pattern image is displayed on one of a plurality of points between the first point and the second point, may obtain a luminance value of the preset point of the live image at a matching time point and control the display to move and display the second pattern image to a point adjacent to one of the plurality of points.

In addition, the electronic device may further include a communication interface, wherein the processor, based on a preset application being executed, may control the communication interface to form a communication channel for communication with the display device, and control the communication interface to transmit the first pattern image to the display device.

Also, the electronic device may further include a communication interface, wherein the processor, based on the display device displaying an image of a single color, may photograph an image including the display device through the camera, correct the image including the display device based on the first correction information, obtain second correction information for correcting uniformity of the display device based on an area corresponding to the display of the display device in the corrected image, and control the communication interface to transmit the second correction information to the display device.

Further, the processor, based on the first correction information being obtained, may control the communication interface to transmit a control signal controlling the display device to display the image of the single color to the display device.

Meanwhile, according to an embodiment of the disclosure, a method of controlling a display device includes, based on a first pattern image being received from an electronic device, displaying the first pattern image, based on a control signal being received from the electronic device, displaying an image of a single color based on the control signal, and based on correction information for correcting uniformity of the display device being received from the electronic device, displaying a content based on the correction information.

Also, the method may further include storing the electronic device transmitting the first pattern image as an electronic device correcting image non-uniformity due to a vignetting phenomenon, and based on the first pattern image being received from the electronic device, transmitting a signal indicating that the image non-uniformity due to the vignetting phenomenon of the electronic device is corrected based on the stored information to the electronic device or displaying a message indicating that the image non-uniformity due to the vignetting phenomenon of the electronic device is corrected.

Meanwhile, according to an embodiment of the disclosure, a method of controlling an electronic device includes, while a first pattern image is displayed on a display device, displaying a live image photographed by a camera of the electronic device, sequentially moving and displaying a second pattern image corresponding to the first pattern image from a center area to a surrounding area of a display of the electronic device, obtaining a luminance value of a preset point of the live image at a time point when the first pattern image included in the live image matches with each of the moved second pattern image as a position of the electronic device is changed, and obtaining first correction information for correcting an image photographed by the camera based on the obtained luminance value and a position where the second pattern image is displayed.

Also, the obtaining the first correction information may include obtaining the first correction information based on the position where the second pattern image is displayed such that the obtained luminance value has the same value, wherein the control method may further include correcting a vignetting phenomenon of the image photographed by the camera based on the first correction information.

Further, the obtaining the first correction information, based on at least one of differences among the obtained luminance values being equal to or greater than a preset value, may obtain the first correction information based on the obtained luminance value and the position where the second pattern image is displayed.

Also, the first pattern image may include part of a circular pattern of which a center part has a preset luminance value, the second pattern image may include the other part of the circular pattern, and the obtaining the luminance value of the preset point may obtain a luminance value of the center part of the circular pattern at each matching time point.

Further, the moving and displaying may sequentially move and display the second pattern image from a first point of the center area of the display to a second point of the surrounding area of the display at a preset interval.

Also, the obtaining the luminance value of the preset point may include, based on the first pattern image included in the live image matching with the second pattern image while the second pattern image is displayed on one of a plurality of points between the first point and the second point, obtaining a luminance value of the preset point of the live image at a matching time point, and the moving and displaying may include, based on the luminance value of the preset point being obtained, moving and displaying the second pattern image to a point adjacent to one of the plurality of points.

Further, the method may further include, based on the preset application being executed, forming a communication channel for communication with the display device and transmitting the first pattern image to the display device.

Also, the method may further include, based on the display device displaying an image of a single color, photographing an image including the display device through the camera, correcting the image including the display device based on the first correction information, obtaining second correction information for correcting uniformity of the display device based on an area corresponding to the display of the display device in the corrected image, and transmitting the second correction information to the display device.

Further, the method may further include, based on the first correction information being obtained, transmitting a control signal controlling the display device to display the image of the single color to the display device.

**[Description of Drawings]**

FIG. 1 is a block diagram illustrating a display system according to an embodiment;
FIG. 2 is a block diagram illustrating a configuration of a display device according to an embodiment;
FIG. 3 is a block diagram illustrating a configuration of an electronic device according to an embodiment;
FIG. 4 is a block diagram illustrating a detailed configuration of an electronic device according to an embodiment;
FIG. 5 is a sequence diagram illustrating a method of correcting image non-uniformity and uniformity of a display device due to a vignetting phenomenon according to an embodiment;
FIG. 6 is a view illustrating a photographing method for correcting image non-uniformity due to a vignetting phenomenon according to an embodiment;
FIG. 7 is a view illustrating a method of correcting image non-uniformity due to a vignetting phenomenon according to an embodiment;
FIG. 8 is a view illustrating a method of correcting uniformity of a display device according to an embodiment;
FIG. 9 is a flow chart illustrating a method of controlling a display device according to an embodiment; and
FIG. 10 is a flow chart illustrating a method of controlling an electronic device according to an embodiment.

**[Mode for Invention]**

An aspect of the disclosure is to provide a display device and an electronic device for correcting image non-uniformity due to a vignetting phenomenon of the electronic device in advance and then, enhancing uniformity of the display device, and a control method thereof.

The disclosure is specifically described with reference to the appended drawings hereinafter.

The terms used in embodiments of the disclosure are selected as general terms which are currently widely used as much as possible in consideration of functions in the disclosure but may be varied depending on intention of those skilled in the art, a precedent, appearance of new technologies, or the like. Also, there is a term which is arbitrarily selected by the applicant in a certain case and in this case, its meaning is specifically described in the relevant description part of the disclosure. Therefore, the term used in the disclosure should be defined based on the meaning of the term and the entire content throughout the disclosure rather than the simple name of the term.

In the specification, the expression such as "have", "may have", "include", or "may include" denotes the existence of such a characteristic (e.g. a numerical value, a function, an operation, or a component such as a part) and does not exclude the existence of additional characteristics.

The expression "at least one of A and/or B" should be interpreted to mean any one of "A" or "B" or "A and B".

The expression "1st", "2nd", "first", "second", or the like used in the specification may be used to describe various elements regardless of any order and/or degree of importance, wherein such expression is used only to distinguish one element from another element and is not intended to limit the relevant element.

A singular expression includes a plural expression, unless obviously differently defined in the context. In the application, the term such as "include" or "consist of" should be construed as designating that there are such characteristics, numbers, steps, operations, components, parts, or a combination thereof described in the specification but not as excluding in advance possibility of the existence or addition of one or more other characteristics, numbers, steps, operations, components, parts, or a combination thereof.

In the disclosure, the term "user" may be referred to as a person who uses an electronic device or a device which uses the electronic device (e.g. an artificial intelligence (AI) electronic device).

Hereinafter, various embodiments of the disclosure are more specifically described with reference to the appended drawings.

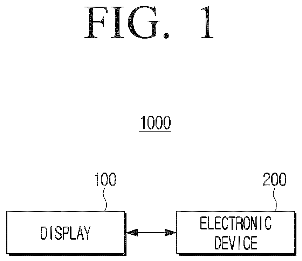

FIG. 1 is a block diagram illustrating a display system 1000 according to an embodiment. As shown in FIG. 1, the display system 1000 includes a display device 100 and an electronic device 200.

The display device 100 may be a device which includes a display such as a TV, a desktop PC, a laptop, a smart phone, a tablet PC, smart glasses, or a smart watch, displays a preset image, corrects image non-uniformity due to the vignetting phenomenon of the electronic device 200, and corrects uniformity of the display device.

Meanwhile, the disclosure is not limited thereto, and the display device 100 may be any device which may display a preset image, correct image non-uniformity due to the vignetting phenomenon of the electronic device 200, and correct uniformity of the display device. Also, a device which provides a preset image to a device having a display such as a set top box (STB) to correct image non-uniformity due to the vignetting phenomenon of the electronic device 200 and correct uniformity of the device having the display.

The electronic device 200 is a device for photographing the display device 100 through a camera to correct image non-uniformity due to the vignetting phenomenon of the electronic device 200, and after correcting the image non-uniformity due to the vignetting phenomenon, correct uniformity of the display device 100, wherein it may be implemented as a smart phone, a tablet PC, smart glasses, or a smart watch. Meanwhile, the disclosure is not limited thereto, and the electronic device 200 may be any device which may correct image non-uniformity due to the vignetting phenomenon of the electronic device 200 and correct uniformity of the display device 100 after correcting the image non-uniformity due to the vignetting phenomenon.

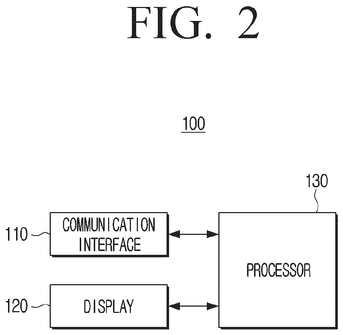

FIG. 2 is a block diagram illustrating a configuration of a display device 100 according to an embodiment.

According to FIG. 2, the display device 100 includes a communication interface 110, a display 120, and a processor 130.

The communication interface 110 is a component performing communication with various types of external devices according to various types of communication methods. For example, the display device 100 may perform communication with the electronic device 200 through the communication interface 110.

The communication interface 110 may include a Wi-Fi module, a Bluetooth module, an infrared communication module, a wireless communication module, etc. Here, each communication module may be implemented in a form of at least one hardware chip.

The Wi-Fi module and the Bluetooth module perform communication in a Wi-Fi method and a Bluetooth method, respectively. In case of using the Wi-Fi module or the Bluetooth module, the module may receive and transmit various connection information such as a SSID and a session key in advance, connect communication by using the connection information, and then receive and transmit various information. The infrared communication module may perform communication based on an infrared data association (IrDA) technology which transmits data wirelessly in a short distance by using infrared light between visible light and a millimeter wave.

The wireless communication module may include at least one communication chip performing communication according to various wireless communication standards such as Zigbee, a 3rd generation (3G), a 3rd generation partnership project (3GPP), long term evolution (LTE), LTE Advanced (LTE-A), a 4th generation (4G), and a 5th generation (5G).

Otherwise, the communication interface 110 may include a wired communication interface such as a HDMI, DP, Thunderbolt, a USB, RGB, a D-SUB, a DVI, or the like.

Besides, the communication interface 110 may include at least one of a local area network (LAN) module, an Ethernet module, or a wired communication module performing communication by using a pair cable, a coaxial cable, a fiber optic cable, or the like.

The display 120 is a component displaying an image and may be implemented as displays having various forms such as a liquid crystal display (LCD), an organic light emitting diode (OLED) display, and a plasma display panel (PDP). The display 120 may include a driving circuit which may be implemented in a form such as an a-si TFT, a low temperature poly silicon (LTPS) TFT, or an organic TFT (OTFT), a backlight unit, or the like therein. Meanwhile, the display 120 may be implemented as a touch screen coupled to a touch sensor, a flexible display, a 3D display, or the like.

The processor 130 controls operations of the display device 100 overall. Specifically, the processor 130 may be connected to each component of the display device 100 to control operations of the display device 100 overall. For example, the processor 130 may be connected to a component such as the communication interface 110, the display 120, memory (not shown), or the like to control operations of the display device 100.

At least one processor 130 may include one or more of a CPU, a Graphics Processing Unit (GPU), an Accelerated Processing Unit (APU), a Many Integrated Core (MIC), a Neural Processing Unit (NPU), a hardware accelerator, or a machine learning accelerator. The at least one processor 130 may control one or any combination of other components of the display device 100 and perform an operation related to communication or data processing. The at least one processor 130 may perform one or more programs or instructions stored in the memory. For example, the at least one processor 130 may perform a method according to an embodiment of the disclosure by executing one or more instructions stored in the memory.

If a method according to an embodiment of the disclosure includes a plurality of operations, the plurality of operations may be performed by one processor and may be performed by a plurality of processors. For example, when a first operation, a second operation, and a third operation are performed by a method according to an embodiment, all of the first operation, the second operation, and the third operation may be performed by a first processor and also, the first operation and the second operation are performed by the first processor (e.g. a general purpose processor) and the third operation may be performed by a second processor (e.g. an AI-dedicated processor).

The at least one processor 130 may be implemented as a single core processor including one core and may be implemented as one or more multi core processors including a plurality of cores (e.g. homogeneous multicores or heterogeneous multicores). If the at least one processor 130 is implemented as a multi core processor, each of the plurality of cores included in the multi core processor may include processor internal memory such as cache memory and on-chip memory, wherein a common cache shared by the plurality of cores may be included in the multi core processor. Also, each of the plurality of cores included in the multi core processor (or part of the plurality of cores) may read and perform program instructions for independently implementing a method according to an embodiment of the disclosure and also, may read and perform program instructions for implementing a method according to an embodiment of the disclosure in connection with all (or part) of the plurality of cores.

If a method according to an embodiment of the disclosure includes a plurality of operations, the plurality of operations may be performed by one core among the plurality of cores included in the multi core processor and may be performed by the plurality of cores. For example, when a first operation, a second operation, and a third operation are performed by a method according to an embodiment, all of the first operation, the second operation, and the third operation may be performed by a first core included in the multi core processor and also, the first operation and the second operation may be performed by the first core included in the multi core processor and the third operation may be performed by the second core included in the multi core processor.

In embodiments of the disclosure, at least one processor 130 may mean a System on Chip (SoC) onto which one or more processors and other electronic components are integrated, a single core processor, a multi core processor, or a core included in the single core processor or the multi core processor, wherein the core may be implemented as a CPU, a GPU, an APU, a MIC, a NPU, a hardware accelerator, or a machine learning accelerator, but embodiments of the disclosure are not limited thereto. Meanwhile, hereinafter, for convenience of the description, operations of the display device 100 are described based on the expression "processor 130".

The processor 130, if receiving a first pattern image from an electronic device 200 through a communication interface 110, may control a display 120 to display the first pattern image. Here, the first pattern image may include part of a circular pattern of which a center part has a preset luminance value.

While the display device 100 displays the first pattern image, the electronic device 200 may confirm image non-uniformity due to the vignetting phenomenon of a camera lens mounted on the electronic device 200 from the photographed image obtained by photographing the first pattern image, obtain a compensation value with respect to the vignetting phenomenon capable of obtaining uniformity image to correct the image, wherein the description with respect to the above is specifically described below.

The processor 130, if receiving a control signal from the electronic device 200 through the communication interface 110, may control the display 120 to display an image of a single color based on the control signal. For example, the processor 130, if receiving a control signal from the electronic device 200 through the communication interface 110, may control the display 120 to display an image where an entire area is white.

Meanwhile, the disclosure is not limited thereto, and the processor 130 may receive the image of the single color from the electronic device 200 through the communication interface 110. In this case, the processor 130 may control the display 120 to display the image of the single color.

While the display device 100 displays the image of the single color, the electronic device 200 may photograph the image of the single color, correct image non-uniformity due to the vignetting phenomenon of the photographed image, and obtain correction information for correcting uniformity of the display device 100 based on the corrected image, wherein the description with respect to a specific method is described based on the drawings.

The processor 130, if receiving correction information for correcting uniformity of the display device 100 from the electronic device 200 through the communication interface 110, may control the display 120 to display a content based on the correction information.

The display device 100 may further include memory, wherein the processor 130 may store the electronic device 200 transmitting the first pattern image as an electronic device correcting image non-uniformity due to the vignetting phenomenon in the memory, and if the first pattern image is received from the electronic device 200 through the communication interface 110, control the communication interface 110 to transmit a signal indicating that the vignetting phenomenon of the electronic device 200 is corrected based on information stored in the memory to the electronic device 200 or control the display 120 to display a message indicating that the vignetting phenomenon of the electronic device 200 is corrected.

Meanwhile, the disclosure is not limited thereto, and the processor 130, if the first pattern image is received from the electronic device 200 through the communication interface 110, control the communication interface 110 to transmit a signal indicating that the vignetting phenomenon of the electronic device 200 is corrected based on information stored in the memory to the electronic device 200 and also control the display 120 to display a message indicating that the vignetting phenomenon of the electronic device 200 is corrected.

In FIG. 2, the description is made such that the electronic device 200 obtains correction information for correcting uniformity of the display device 100 and provides the obtained information to the display device 100, but the disclosure is not limited thereto. For example, the electronic device 200, while the display device 100 displays an image of a single color, may photograph the image of the single color, correct the vignetting phenomenon of the photographed image, and provide the corrected image to the display device 100. In this case, the display device 100 may obtain correction information for correcting uniformity of the display device 100 based on the corrected image.

Meanwhile, in FIG. 2, the electronic device 200 may confirm image non-uniformity due to the vignetting phenomenon of the camera lens mounted on the electronic device 200 from the photographed image obtained by photographing the first pattern image displayed on the display device 100, obtain a compensation value with respect to the vignetting phenomenon capable of obtaining a uniformity image to correct the image, wherein the disclosure is not limited thereto. For example, the electronic device 200 may photograph a first pattern image displayed on the display device 100 and transmit the photographed image to the display device 100. The display device 100 may confirm image non-uniformity due to the vignetting phenomenon of the camera lens mounted on the electronic device 200 based on the received image, obtain a compensation value for the vignetting phenomenon which may obtain a uniform image, and transmit the obtained compensation value to the electronic device 200.

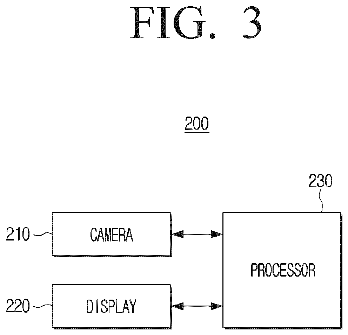

FIG. 3 is a block diagram illustrating a configuration of a electronic device 200 according to an embodiment.

According to FIG. 3, the electronic device 200 includes a camera 210, a display 220, and a processor 230.

The camera 210 is a component for capturing a static image or a moving image. The camera 210 may photograph a static image at a specific time point but may successively capture the static image.

The camera 210 may photograph a front of the electronic device 200 to photograph the display device 100 in front of the electronic device 200. The processor 120 may obtain information for image non-uniformity due to the vignetting phenomenon from an image photographed by the camera 210 and information for correcting uniformity of the display device 100.

The camera 210 includes a lens, a shutter, an aperture, a solid-state imaging element, an analog front end (AFE), and a timing generator (TG). The shutter controls a time when light reflected from a subject enters into the camera 210, and the aperture controls an amount of light incident on the lens by mechanically increasing or reducing a size of an opening through which light enters. The solid-state imaging element, if light reflected from the subject is accumulated as a photo charge, outputs a pattern resulting from the photo charge as an electric signal. The TG outputs a timing signal for readout on pixel data of the solid-state imaging element, and the AFE samples and digitalizes the electric signal outputted from the solid-state imaging element.

The display 220 is a component displaying an image and may be implemented as displays having various forms such as a liquid crystal display (LCD), an organic light emitting diode (OLED) display, and a plasma display panel (PDP). The display 220 may include a driving circuit which may be implemented in a form such as an a-si TFT, a low temperature poly silicon (LTPS) TFT, or an organic TFT (OTFT), a backlight unit, or the like therein. Meanwhile, the display 220 may be implemented as a touch screen coupled to a touch sensor, a flexible display, a 3D display, or the like.

The processor 230 controls operations of the electronic device 200 overall. Specifically, the processor 230 may be connected to each component of the electronic device 200 to control operations of the electronic device 200 overall. For example, the processor 230 may be connected to a component such as the camera 210, the display 220, the communication interface (not shown), or the like to control operations of the electronic device 200.

At least one processor 230 may include one or more of a CPU, a Graphics Processing Unit (GPU), an Accelerated Processing Unit (APU), a Many Integrated Core (MIC), a Neural Processing Unit (NPU), a hardware accelerator, or a machine learning accelerator. The at least one processor 230 may control one or any combination of other components of the electronic device 200 and perform an operation related to communication or data processing. The at least one processor 230 may perform one or more programs or instructions stored in the memory. For example, the at least one processor 230 may perform a method according to an embodiment of the disclosure by executing one or more instructions stored in the memory.

If a method according to an embodiment of the disclosure includes a plurality of operations, the plurality of operations may be performed by one processor and may be performed by a plurality of processors. For example, when a first operation, a second operation, and a third operation are performed by a method according to an embodiment, all of the first operation, the second operation, and the third operation may be performed by a first processor and also, the first operation and the second operation are performed by the first processor (e.g. a general purpose processor) and the third operation may be performed by a second processor (e.g. an AI-dedicated processor).

The at least one processor 230 may be implemented as a single core processor including one core and may be implemented as one or more multi core processors including a plurality of cores (e.g. homogeneous multicores or heterogeneous multicores). If the at least one processor 230 is implemented as a multi core processor, each of the plurality of cores included in the multi core processor may include processor internal memory such as cache memory and on-chip memory, wherein a common cache shared by the plurality of cores may be included in the multi core processor. Also, each of the plurality of cores included in the multi core processor (or part of the plurality of cores) may read and perform program instructions for independently implementing a method according to an embodiment of the disclosure and also, may read and perform program instructions for implementing a method according to an embodiment of the disclosure in connection with all (or part) of the plurality of cores.

If a method according to an embodiment of the disclosure includes a plurality of operations, the plurality of operations may be performed by one core among the plurality of cores included in the multi core processor and may be performed by the plurality of cores. For example, when a first operation, a second operation, and a third operation are performed by a method according to an embodiment, all of the first operation, the second operation, and the third operation may be performed by a first core included in the multi core processor and also, the first operation and the second operation may be performed by the first core included in the multi core processor and the third operation may be performed by the second core included in the multi core processor.

In embodiments of the disclosure, at least one processor 230 may mean a System on Chip (SoC) onto which one or more processors and other electronic components are integrated, a single core processor, a multi core processor, or a core included in the single core processor or the multi core processor, wherein the core may be implemented as a CPU, a GPU, an APU, a MIC, a NPU, a hardware accelerator, or a machine learning accelerator, but embodiments of the disclosure are not limited thereto. Meanwhile, hereinafter, for convenience of the description, operations of the electronic device 200 are described based on the expression "processor 230".

The processor 230, while a first pattern image is displayed on a display device 100, may display a live image photographed by the camera 210 and control the display 220 to sequentially move and display a second pattern image corresponding to the first pattern image from a center area to a surrounding area of the display 220. For example, the processor 230 may control the display 220 to sequentially move and display the second pattern image from a first point of the center area of the display 220 to a second point of the surrounding area of the display 220 at a preset interval. Here, the first pattern image may include part of the circular pattern of which a center part has a preset luminance value, and the second pattern image may include the other part of the circular pattern. Also, while the second pattern image moves, the processor 230 may photograph the same point of the display device 100.

The processor 230 may obtain a luminance value of a preset point of the live image at a time point when the first pattern image included in the live image matches with each of the moved second pattern image as a position of the electronic device 200 is changed. For example, the processor 230, if the first pattern image included in the live image matches with the second pattern image while the second pattern image is displayed on one of a plurality of points between the first point and the second point, may obtain a luminance value of the preset point of the live image at a matching time point.

The processor 230, if obtaining the luminance value of the preset point, may control the display 220 to move and display the second pattern image to a point adjacent to one of a plurality of points. That is, the processor 230 may obtain a luminance value of the preset point of the live image in each of the plurality of points between the first point and the second point. Here, the preset point may be one point among a screen of the display device 100. For example, the preset point may be a center part of the circular pattern, and the processor 230 may obtain a luminance value of the center part of the circular pattern at each matching time point.

The processor 230 may obtain first correction information for correcting an image photographed by the camera 210 based on the obtained luminance value and a position where the second pattern image is displayed. Also, the processor 230 may obtain the first correction information based on the position where the second pattern image is displayed such that the obtained luminance value has the same value, and correct image non-uniformity due to the vignetting phenomenon of the image photographed by the camera 210 based on the first correction information.

Further, the processor 230, if at least one of differences among the obtained luminance values is equal to or greater than a preset value, may obtain the first correction information based on the obtained luminance value and the position where the second pattern image is displayed. That is, the processor 230, if all of differences among the obtained luminance values are less than the preset value, may not obtain the first correction information.

Meanwhile, the electronic device 200 may further include a communication interface, and the processor 230, if the preset application is executed, may control the communication interface to form a communication channel for communication with the display device 100 and control the communication interface to transmit the first pattern image to the display device 100.

Meanwhile, the disclosure is not limited thereto, and the display device 100 may store the first pattern image and the second pattern image. In this case, the processor 230, if the preset application is executed, may receive the second pattern image from the display device 100 through the communication interface.

Meanwhile, the electronic device 200 may further include a communication interface, and the processor 230, if the display device 100 displays an image of a single color, may photograph an image including the display device 100 through the camera 210, correct the image including the display device 100 based on first correction information, obtain second correction information for correcting uniformity of the display device 100 based on an area corresponding to the display 120 of the display device 100 in the corrected image, and control the communication interface to transmit second correction information to the display device 100. That is, the processor 230 may correct the image including the display device 100 based on the first correction information to correct image non-uniformity due to the vignetting phenomenon by the camera 210, wherein the corrected image may be an image in which only uniformity of the display device 100 is critical.

Here, the processor 230, if the first correction information is obtained, may control the communication interface to transmit a control signal controlling the display device 100 to display the image of the single color to the display device 100. Meanwhile, the disclosure is not limited thereto, and the processor 230, if the first correction information is obtained, may control the communication interface to transmit the image of the single color to the display device 100.

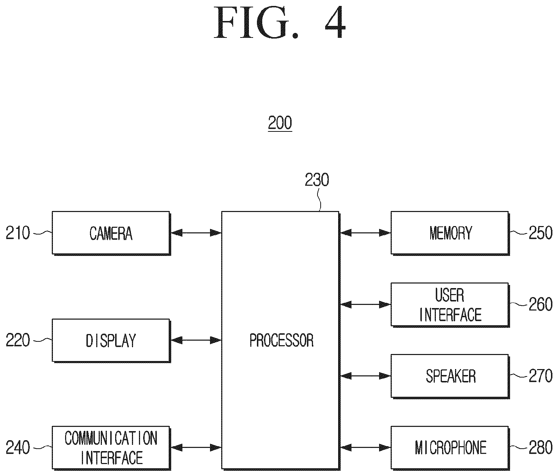

FIG. 4 is a block diagram illustrating a detailed configuration of an electronic device 200 according to an embodiment.

FIG. 4 is a block diagram illustrating a detailed configuration of an electronic device 200 according to an embodiment. The electronic device 200 may include a camera 210, a display 220, and a processor 230. Also, according to FIG. 4, the electronic device 100 may further include a communication interface 240, memory 250, a user interface 260, a speaker 270, and a microphone 280. The detailed description of a part overlapped with the components shown in FIG. 3 among the components shown in FIG. 4 is omitted.

The communication interface 240 is a configuration performing communication with various types of external devices according to various types of communication methods. For example, the electronic device 200 may perform communication with the display device 100 through the communication interface 240.

The communication interface 240 may include a Wi-Fi module, a Bluetooth module, an infrared communication module, a wireless communication module, etc. Here, each communication module may be implemented in a form of at least one hardware chip.

The Wi-Fi module and the Bluetooth module perform communication in a Wi-Fi method and a Bluetooth method, respectively. In case of using the Wi-Fi module or the Bluetooth module, the module may receive and transmit various connection information such as a SSID and a session key in advance, connect communication by using the connection information, and then receive and transmit various information. The infrared communication module may perform communication based on an infrared data association (IrDA) technology which transmits data wirelessly in a short distance by using infrared light between visible light and a millimeter wave.

The wireless communication module may include at least one communication chip performing communication according to various wireless communication standards such as Zigbee, a 3rd generation (3G), a 3rd generation partnership project (3GPP), long term evolution (LTE), LTE Advanced (LTE-A), a 4th generation (4G), and a 5th generation (5G).

Otherwise, the communication interface 240 may include a wired communication interface such as a HDMI, DP, Thunderbolt, a USB, RGB, a D-SUB, a DVI, or the like.

Besides, the communication interface 240 may include at least one of a local area network (LAN) module, an Ethernet module, or a wired communication module performing communication by using a pair cable, a coaxial cable, a fiber optic cable, or the like.

The memory 250 may refer to hardware storing information such as data in an electric form or a magnetic form in order that the processor 230 or the like may have access thereto. For the above, the memory 250 may be implemented as at least one hardware of non-volatile memory, volatile memory, flash memory, a hard disk drive (HDD) or a solid state drive (SDD), RAM, or ROM.

The memory 250 may store at least one instruction required for an operation of the electronic device 200 or the processor 230. Here, the instruction may be written in a machine language, which is a computer-understandable language as a code unit instructing an operation of the electronic device 200 or the processor 230. Otherwise, the memory 250 may store a plurality of instructions performing specific work of the electronic device 200 or the processor 230 as an instruction set.

The memory 250 may store data which is information in a bit or bite unit indicating a character, a number, an image, or the like. For example, the memory 250 may store information about a device where correction of image non-uniformity is completed due to the vignetting phenomenon.

The memory 250 may be accessed by the processor 230, wherein the processor 230 may perform reading/recording/correcting/deleting/renewing, or the like with respect to the instructions, the instruction set, or data.

The user interface 260 may be implemented as a button, a touch pad, a mouse, a keyboard, or the like or may be also implemented as a touch screen which may perform the display function and the manipulation input function together. Here, the button may be various types of buttons such as a mechanical button, a touch pad, or a wheel formed at any area such as a front part, a side part, a rear part, or the like of an appearance of a body of the electronic device 200.

The speaker 270 is a component outputting not only various audio data processed in the processor 230 but also various alarm sound, voice messages, or the like.

The microphone 280 is a configuration for receiving sound and converting the sound to an audio signal. The microphone 280 may be electrically connected to the processor 230 and receive sound under control of the processor 230.

For example, the microphone 280 may be formed as an integral type as being integrated into an upper side of the electronic device 200 or in a front direction, a side direction, or the like. Otherwise, the microphone 280 may be included in a remote controller separate from the electronic device 200. In this case, the remote controller may receive sound through the microphone 280 and may provide the received sound to the electronic device 200.

The microphone 280 may include various components such as a microphone collecting sound in an analog form, an amplifier circuit amplifying the collected sound, an A/D conversion circuit sampling and converting the amplified sound to a digital signal, and a filter circuit removing a noise component from the converted digital signal.

Meanwhile, the microphone 280 may be implemented in a form of a sound sensor, wherein any type of component is proper if the component may collect sound.

As above, the electronic device 200 may correct image non-uniformity due to the vignetting phenomenon by photographing the display device a plurality of times. Also, the electronic device 200 may correct uniformity of the display device 100 based on the image where image non-uniformity due to the vignetting phenomenon is corrected, minimize an external element, and then enhance uniformity of the display device 100. Further, even if a view angle, a value of an aperture, or the like of the camera 210 is changed, by using the above method, image non-uniformity due to the vignetting phenomenon may be corrected, uniformity of the display device 100 may be enhanced, and thus user convenience may be improved.

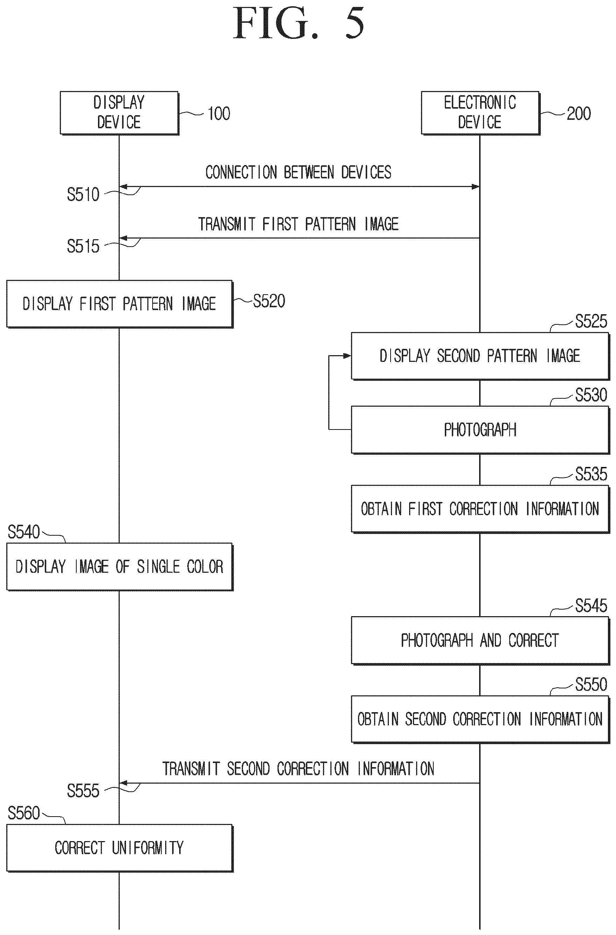

Hereinafter, operations of the display device 100 and the electronic device 200 are more specifically described with reference to FIGS. 5 to 8. In FIGS. 5 to 8, individual examples are described for convenience of the description. Meanwhile, the individual examples of FIGS. 5 to 8 may be implemented in any combined state.

FIG. 5 is a sequence diagram illustrating a method of correcting image non-uniformity due to the vignetting phenomenon and uniformity of a display device 100 according to an embodiment.

In advance, the display device 100 and the electronic device 200 may form a communication channel (S510). For example, the electronic device 200, if the preset application is executed, may form a communication channel for communication with the display device 100. For example, the display device 100, if the preset application is executed, may form a communication channel for communication with the electronic device 200. Here, the communication channel may be at least one of a wireless communication channel or a wired communication channel.

The electronic device 200 may transfer the first pattern image to the display device 100 (S515), and the display device 100 may display the first pattern image (S520). The electronic device 200 may display a live image photographed by the camera and a second pattern image corresponding to the first pattern image (S525). The display device 100, if the first pattern image matches with the second pattern image, may perform photographing (S530). If the electronic device 200 may display a live image photographing the first pattern image displayed in the display device 100 through the camera and overlay and display the second pattern image on the live image. The user may move a position of the electronic device 200 to match the first pattern image with the second pattern image, and the electronic device 200 may perform photographing if the first pattern image matches with the second pattern image. Here, the first pattern image may include part of the circular pattern of which a center part has a preset luminance value, and the second pattern image may include the other part of the circular pattern. Meanwhile, the disclosure is not limited thereto, and the form may be various if the first pattern image matches with the second pattern image.

The electronic device 200, if the first pattern image matches with the second pattern image, may perform photographing and obtain a luminance value of the preset point. For example, if the first pattern image and the second pattern image form a circular pattern of which a center part has the preset luminance value, the electronic device 200 may obtain a luminance value of a center part of the circular pattern.

The electronic device 200, if the luminance value of the preset point is obtained, may move and display the second pattern image in a surrounding area direction of the display 220, and if the first pattern image matches with the second pattern image, perform photographing and obtain a luminance value of the preset point. The electronic device 200 may obtain a plurality of luminance values by repeating this operation several times. Here, the second pattern image may move along a straight line.

In this case, the obtained luminance values are to be ideally the same because the electronic device 200 obtains the luminance values of the same point of the display device 100, but a point of obtaining a luminance value in the lens of the camera 210 moves along the movement of the second pattern image, and the vignetting phenomenon may occur due to decrease of an amount of light of a peripheral part of the lens. That is, the obtained luminance value may be darkened as the second pattern image moves in the surrounding area direction of the display 220.

The electronic device 200 may obtain first correction information based on a plurality of luminance values. For example, the electronic device 200 may obtain a luminance function per distance based on a point where the second pattern image is displayed and a luminance value obtained at each point and may correct image non-uniformity due to a vignetting phenomenon of an image to be photographed thereafter based on the luminance function per distance.

The display device 100 may display an image of a single color (S540). For example, the electronic device 200, if the first correction information is obtained, may transmit a control signal controlling the display device 100 to display an image of a single color to the display device 100, and the display device 100 may display the image of the single color.

The electronic device 200 may photograph an image including the display device 100 and correct an image photographed based on the first correction information (S545). The electronic device 200 may obtain second correction information based on the corrected image (S550), and transmit the second correction information to the display device 100 (S555).

The display device 100 may correct uniformity based on the second correction information (S560).

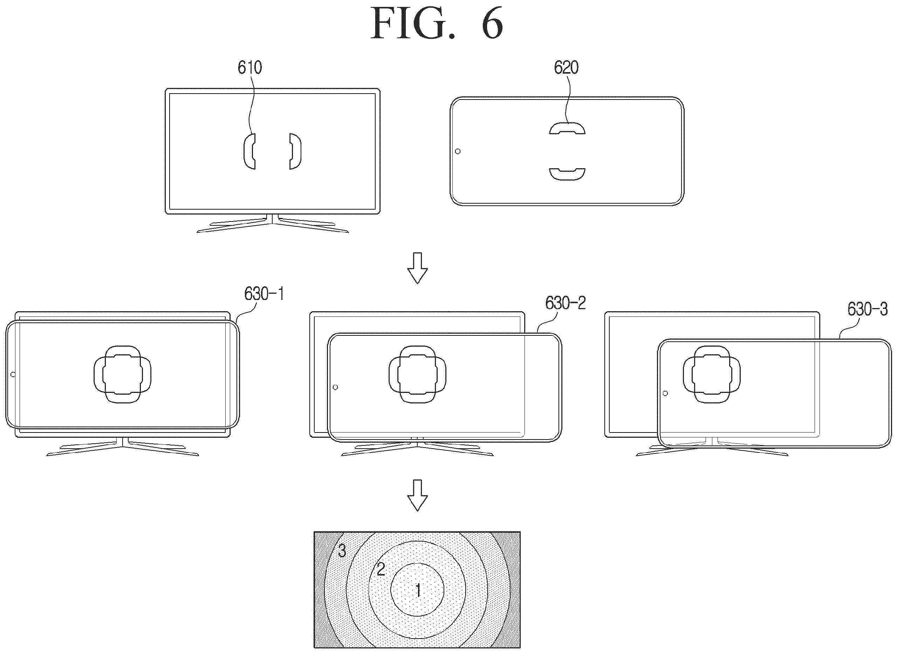

FIG. 6 is a view illustrating a photographing method for correcting image non-uniformity due to a vignetting phenomenon according to an embodiment.

As shown in an upper end of FIG. 6, the display device 100 may display a first pattern image 610, and the electronic device 200 may display the second pattern image 620.

The user may move a position of the electronic device 200 as shown in the middle of FIG. 6 to correct image non-uniformity due to the vignetting phenomenon. In advance, as shown in a first image in the middle of FIG. 6, if the second pattern image is displayed at a center area of the display 220 (630-1), and the first pattern image matches with the second pattern image, the electronic device 200 may obtain a luminance value of the preset point.

The electronic device 200, if the luminance value of the preset point is obtained, may move and display the second pattern image in a top left direction of the display 220 as shown in a second image in the middle of FIG. 6 (630-2), and if the first pattern image matches with the second pattern image, obtain a luminance value of the preset point.

The electronic device 200, if the luminance value of the preset point is obtained, may move and display the second pattern image in a top left direction of the display 220 as shown in a third image in the middle of FIG. 6 (630-3), and if the first pattern image matches with the second pattern image, the electronic device 200 may obtain a luminance value of the preset point.

Through the method as above, the electronic device 200 may obtain a luminance value at three points, wherein luminance values of the three points may be darkened as being closer to an outer part as shown in the bottom of FIG. 6.

In FIG. 6, for convenience of the description, it is described that luminance values of three points are obtained, but the disclosure is not limited thereto, wherein the electronic device 200 may obtain luminance values at various times as many as it needs.

Also, in FIG. 6, it is described that the second pattern image moves in a top left direction, but the disclosure is not limited thereto. For example, the second pattern image may move in a bottom left direction, and if a straight line is maintained, it may move in various directions in any degree.

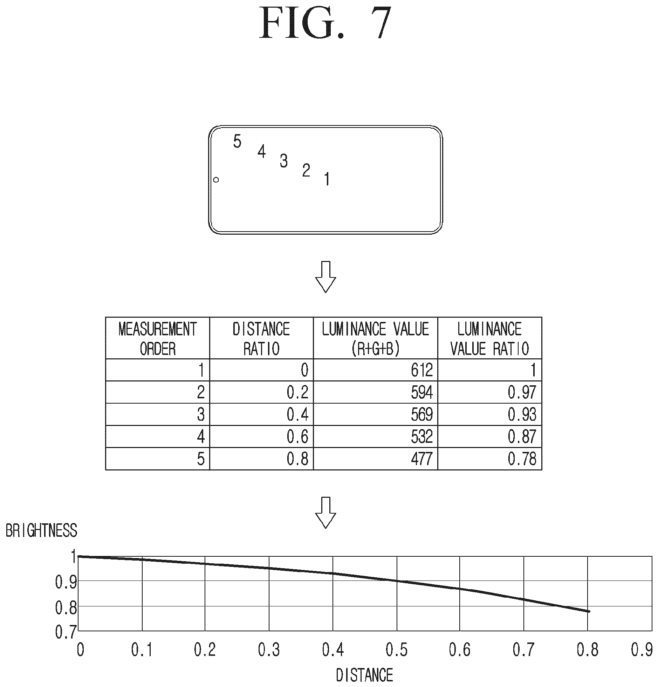

FIG. 7 is a view illustrating a method of correcting image non-uniformity due to a vignetting phenomenon according to an embodiment.

The electronic device 100 may move the second pattern image to obtain a plurality of luminance values. For example, the electronic device 100 may move the second pattern images five times to obtain five luminance values as shown in an upper end of FIG. 7.

The five luminance values may be expressed as a measurement order, a distance, a ratio of the distance, a luminance value, or a ratio of the luminance value as shown in the middle of FIG. 7. Here, the distance (pixel unit) may be obtained through a mathematical equation as below.

$$\text{Distance} = \text{sqrt}(\ (x-(camW/2))^2 + (y-(camH/2))^2\ )$$

Here, camW is horizontal resolution (pixel unit) of the camera, camH is vertical resolution (pixel unit) of the camera, x is a horizontal coordinate (pixel unit) of a camera imaging potion, and y represents a vertical coordinate (pixel unit) of the camera imaging potion.

The electronic device 200 may obtain a luminance function per distance based on a ratio of a distance and a ratio of a luminance value. For example, the electronic device 200 may obtain a luminance function per distance based on the ratio of the distance and the ratio of the luminance value by using a polymomial least square (regression) method as first correction information. For example, the luminance function per distance may be $y = -0.25x^2 - 0.07x + 0.998$ and may be illustrated as shown in the bottom of FIG. 7. Here, y may represent an amount of luminance variation, and x may represent a distance ratio in a pixel unit. In FIG. 7, for convenience of the description, the luminance value is determined as a value resulting from adding RGB values, but the luminance function per distance may be obtained with respect to each RGB value.

The electronic device 200 may correct image non-uniformity due to the vignetting phenomenon of the image photographed based on the luminance function per distance. For example, the electronic device 200 may obtain an amount of variation in luminance per position of the pixel and correct image non-uniformity due to the vignetting phenomenon of the photographed image by multiplying an inverse number of the obtained amount of variation in luminance per position and each RGB value of the pixel in the photographed image. For example, in the image, if the pixel coordinate is horizontal 1200 and vertical 700, RGB values are 200, 200, 200, and resolution of the camera is horizontal 4000 and vertical 3000, the electronic device 200 may obtain a distance and a distance ratio as below.

$$\text{Distance} = \text{sqrt}(\ (1200-(4000/2))^2 + (700-(3000/2))^2\ ) = 1131.371$$

$$\text{Distance ratio} = 1131.371 / \sqrt{(4000/2)^2 + (3000/2)^2} = 0.452548$$

The electronic device 200 may obtain an amount of variation in luminance, y = 0.915122, by inputting the distance ratio into the luminance function per distance, and each RGB value may obtain 218.5502 by multiplying each RGB value and an inverse number of y, 1/0.915122 = 1.092751. The electronic device 200 may obtain corrected RGB values of all pixels of the image photographed in the above method and correct image non-uniformity due to the vignetting phenomenon of the photographed image.

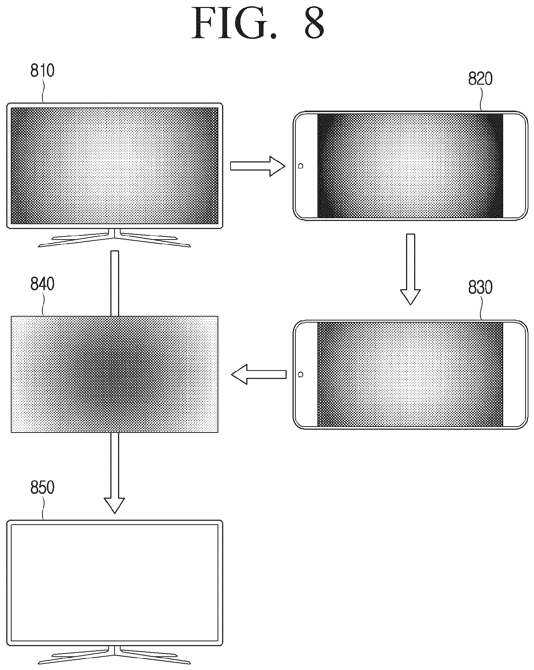

FIG. 8 is a view illustrating a method of correcting uniformity of a display device 100 according to an embodiment.

The display device 100 may display an image of a single color (810). For example, the electronic device 200, if the first correction information for correcting image non-uniformity due to the vignetting phenomenon of the electronic device 200 is obtained, may transmit a control signal controlling the display device 100 to display the image of the single color to the display device 100, and the display device 100 may display the image of the single color. Also, the display device 100, if receiving a user command for correcting uniformity, may display an image of the single color and may transmit a control command to perform an operation for correcting uniformity to a device in which correction of the image non-uniformity due to the vignetting phenomenon is completed.

The electronic device 200 may photograph the display device 100 which is displaying the image of the single color (820). For example, the electronic device 200 may photograph the display device 100 which is displaying the image of the single color and may crop only an area including the image of the single color from the photographed image.

The electronic device 200 may correct a photographed image based on the first correction information for correcting image non-uniformity due to the vignetting phenomenon of the electronic device 200 (830). That is, the electronic device 200 may remove an effect of image non-uniformity due to the vignetting phenomenon among uniformity of the display device 100 affecting a photographing result in the photographed image and the image non-uniformity due to the vignetting phenomenon.

The electronic device 200 may provide the corrected image to the display device 100 (840). Here, the corrected image may be in a state including only an effect resulting from uniformity.

The display device 100 may obtain second correction information for correcting uniformity of the display device 100 based on the corrected image and display a content based on the second correction information for improving uniformity of the display device 100 (850). For example, the display device 100 may obtain an inverse image of the luminance value of the corrected image to display a content based on the inverse image.

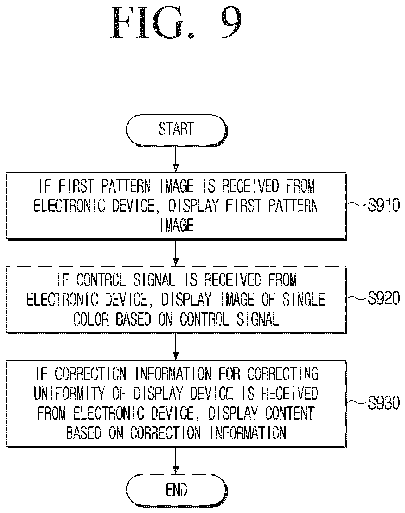

FIG. 9 is a flow chart illustrating a method of controlling a display device according to an embodiment.

In advance, the method includes, if a first pattern image is received from an electronic device, displaying the first pattern image (S910). Further, the method includes, if a control signal is received from the electronic device, displaying an image of a single color based on the control signal (S920). Further, the method includes, if correction information for correcting uniformity of the display device is received from the electronic device, displaying a content based on the correction information (S930).

Also, the method may further include storing the electronic device transmitting the first pattern image as an electronic device correcting image non-uniformity due to the vignetting phenomenon, and if the first pattern image is received from the electronic device, transmitting a signal indicating that the image non-uniformity due to the vignetting phenomenon of the electronic device is corrected based on information stored in the memory to the electronic device or displaying a message indicating that the image non-uniformity due to the vignetting phenomenon of the electronic device is corrected.

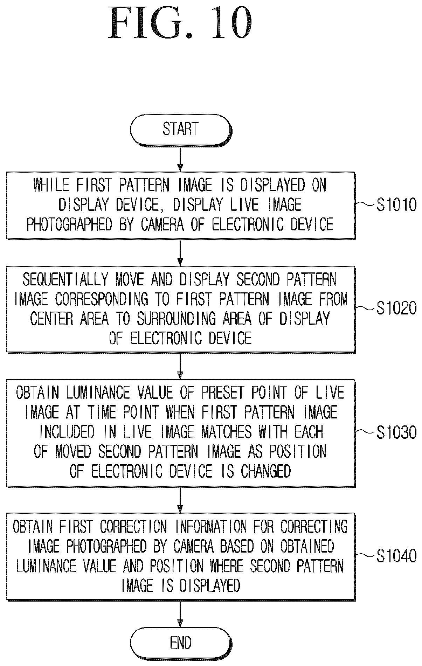

FIG. 10 is a flow chart illustrating a method of controlling an electronic device according to an embodiment.

In advance, while a first pattern image is displayed on a display device, displaying a live image photographed by a camera of the electronic device (S1010). Further, the method includes sequentially moving and displaying a second pattern image corresponding to the first pattern image from a center area to a surrounding area of a display of the electronic device (S1020). Further, the method includes obtaining a luminance value of a preset point of the live image at a time point when the first pattern image included in the live image matches with each of the moved second pattern image as a position of the electronic device is changed (S1030). Further, the method includes obtaining first correction information for correcting an image photographed by the camera based on the obtained luminance value and a position where the second pattern image is displayed (S1040).

Also, the obtaining the first correction information (S1040) may include obtaining the first correction information based on the position where the second pattern image is displayed such that the obtained luminance value has the same value, wherein the control method further includes correcting the vignetting phenomenon of the image photographed by the camera based on the first correction information.

Further, the obtaining the first correction information (S1040) may include, if at least one of differences among the obtained luminance values is equal to or greater than a preset value, obtaining the first correction information based on the obtained luminance value and the position where the second pattern image is displayed.

Further, the first pattern image may include part of a circular pattern of which a center part has a preset luminance value, the second pattern image may include the other part of the circular pattern, and the obtaining the luminance value of the preset point (S1030) may obtain a luminance value of the center part of the circular pattern at each matching time point.

Meanwhile, the moving and displaying (S1020) may sequentially move and display the second pattern image from a first point of the center area of the display to a second point of the surrounding area of the display at a preset interval.

Also, the obtaining the luminance value of the preset point (S1030) may include, if the first pattern image included in the live image matches with the second pattern image while the second pattern image is displayed on one of a plurality of points between the first point and the second point, obtaining a luminance value of the preset point of the live image at a matching time point, and the moving and displaying (S1020) may include, if the luminance value of the preset point is obtained, moving and displaying the second pattern image to a point adjacent to one of the plurality of points.

Further, the method may further include, if the preset application is executed, forming a communication channel for communication with the display device and transmitting the first pattern image to the display device.

Meanwhile, the method may further include, if the display device displays an image of a single color, photographing an image including the display device through the camera, correcting the image including the display device based on the first correction information, obtaining second correction information for correcting uniformity of the display device based on an area corresponding to the display of the display device in the corrected image, and transmitting the second correction information to the display device.

Here, the method may further include, if first correction information is obtained, transmitting a control signal controlling the display device to display the image of the single color to the display device.

According to various embodiments of the disclosure as above, the electronic device may correct image non-uniformity due to the vignetting phenomenon by photographing the display device a plurality of times.

Also, the electronic device may correct uniformity of the display device based on the image where image non-uniformity due to the vignetting phenomenon is corrected to minimize an external element, and then enhance uniformity of the display device.

Further, even if a view angle, a value of an aperture, or the like of the camera is changed, by using the above method, the image non-uniformity due to the vignetting phenomenon may be corrected, and the uniformity of the display device may be enhanced, and thus user convenience may be improved.

Meanwhile, according to an embodiment of the disclosure, various examples described above may be implemented as software including instructions stored in machine (e.g. a computer) readable storage media. The machine refers to a device which calls instructions stored in the storage media and is operable according to the called instructions, wherein the machine may include an electronic device (e.g. an electronic device A) according to the disclosed embodiments. If the instructions are executed by a processor, the processor may perform a function corresponding to the instructions directly or by using other components under control of the processor. The instructions may include a code generated or executed by a compiler or an interpreter. A machine readable storage medium may be provided in a form of a non-transitory storage medium. Here, the term 'non-transitory' merely means that the storage media do not include a signal and are tangible, wherein the term does not distinguish a case that data is stored in the storage media semipermanently from a case that data is stored in the storage media temporarily.

Also, according to an embodiment of the disclosure, the method according to various examples described above may be provided to be included in a computer program product. The computer program product may be traded between a seller and a buyer as goods. The computer program product may be distributed in a form of a machine readable storage medium (e.g. compact disc read only memory (CD-ROM)) or on-line via an application store (e.g. play store™). In the case of on-line distribution, at least part of the computer program product may be stored at least temporarily or may be generated temporarily in a storage medium such as memory of a server of a manufacturer, a server of an application store, or a relay server.

Also, according to an embodiment of the disclosure, various embodiments described as above may be implemented in a recording medium that may be read by a computer or a device similar thereto by using software, hardware, or a combination thereof. In some cases, embodiments described in the specification may be implemented as a processor itself. According to software implementation, embodiments such as procedures and functions described in the specification may be also implemented as separate software. Each software may perform one or more functions and operations described in the specification.

Meanwhile, computer instructions for performing the processing operation of the machine according to the various embodiments above may be stored in a non-transitory computer readable medium. Computer instructions stored in this non-transitory computer readable medium that, when executed by a processor of a specific device, causes the specific device to perform a processing operation of the device according to the various embodiments. The non-transitory computer readable medium does not mean a medium that stores data for a short time such as a resistor, a cache, memory, or the like but a machine readable medium that stores data semipermanently. A specific example of the non-transitory computer readable medium may be a CD, a DVD, a hard disk, a Blu-ray disk, a USB, a memory card, ROM, etc.

Also, each of components (e.g. a module or a program) according to the various embodiments above may be configured as a single item or a plurality of items, wherein a partial subcomponent of the aforementioned relevant subcomponents may be omitted, or another subcomponent may be further included in various embodiments. Mostly or additionally, some components (e.g. a module or a program) may be integrated into one item and may identically or similarly perform a function implemented by each of the relevant components before the integration. According to various embodiments, operations performed by a module, a program, or another component may be executed sequentially, in parallel, repetitively, or heuristically, or at least part of the operations may be executed in different orders or be omitted, or another operation may be added.

As the above, preferable examples of the present disclosure are shown and described. However, it is obvious that the disclosure is not limited to the aforementioned specific examples, and various modifications may be implemented by those skilled in the art without deviating from the gist of the disclosure claimed in the scope of claims, wherein these modifications should not be independently understood from the technical spirit or prospect of the disclosure.

**Claims**

1.  A display device comprising:

    a communication interface;
    a display; and
    at least one processor connected to the communication interface and the display to control the display device, wherein the processor is configured to:

    based on a first pattern image being received from an electronic device through the communication interface, control the display to display the first pattern image;
    based on a control signal being received from the electronic device through the communication interface, control the display to display an image of a single color based on the control signal; and
    based on correction information for correcting uniformity of the display device being received from the electronic device through the communication interface, control the display to display a content based on the correction information.

2.  The display device of claim 1, further comprising:

    memory,
    wherein the processor is configured to:

    store the electronic device transmitting the first pattern image as an electronic device correcting image non-uniformity due to a vignetting phenomenon in the memory; and
    based on the first pattern image being received from the electronic device through the communication interface, control the communication interface to transmit a signal indicating that the image non-uniformity due to the vignetting phenomenon of the electronic device is corrected based on information stored in the memory to the electronic device or control the display to display a message indicating that the image non-uniformity due to the vignetting phenomenon of the electronic device is corrected.

3.  An electronic device comprising:

    a camera;
    a display; and
    at least one processor connected to the camera and the display to control the electronic device, wherein the processor is configured to:

    while a first pattern image is displayed on a display device, control the display to display a live image photographed by the camera and sequentially move and display a second pattern image corresponding to the first pattern image from a center area to a surrounding area of the display;
    obtain a luminance value of a preset point of the live image at a time point when the first pattern image included in the live image matches with each of the moved second pattern image as a position of the electronic device is changed; and
    obtain first correction information for correcting an image photographed by the camera based on the obtained luminance value and a position where the second pattern image is displayed.

**4.** The electronic device of claim 3, wherein the processor is configured to:

obtain the first correction information based on the position where the second pattern image is displayed such that the obtained luminance value has the same value; and

correct a vignetting phenomenon of the image photographed by the camera based on the first correction information.

**5.** The electronic device of claim 3, wherein the processor is configured to:
based on at least one of differences among the obtained luminance values being equal to or greater than a preset value, obtain the first correction information based on the obtained luminance value and the position where the second pattern image is displayed.

**6.** The electronic device of claim 3, wherein the first pattern image:
includes part of a circular pattern of which a center part has a preset luminance value,

wherein the second pattern image:
includes the other part of the circular pattern, and
wherein the processor is configured to:
obtain a luminance value of the center part of the circular pattern at each matching time point.

**7.** The electronic device of claim 3, wherein the processor is configured to:
control the display to sequentially move and display the second pattern image from a first point of the center area of the display to a second point of the surrounding area of the display at a preset interval.

**8.** The electronic device of claim 7, wherein the processor is configured to:

based on the first pattern image included in the live image matching with the second pattern image while the second pattern image is displayed on one of a plurality of points between the first point and the second point, obtain a luminance value of the preset point of the live image at a matching time point; and
control the display to move and display the second pattern image to a point adjacent to one of the plurality of points.

**9.** The electronic device of claim 3, further comprising:

a communication interface,
wherein the processor is configured to:

based on a preset application being executed, control the communication interface to form a communication channel for communication with the display device; and
control the communication interface to transmit the first pattern image to the display device.

**10.** The electronic device of claim 3, further comprising:

a communication interface,
wherein the processor is configured to:

based on the display device displaying an image of a single color, photograph an image including the display device through the camera;
correct the image including the display device based on the first correction information;
obtain second correction information for correcting uniformity of the display device based on an area corresponding to the display of the display device in the corrected image; and
control the communication interface to transmit the second correction information to the display device.

**11.** The electronic device of claim 10, wherein the processor is configured to:
based on the first correction information being obtained, control the communication interface to transmit a control signal controlling the display device to display the image of the single color to the display device.

**12.** A method of controlling a display device, comprising:

based on a first pattern image being received from an electronic device, displaying the first pattern image;
based on a control signal being received from the electronic device, displaying an image of a single color based on the control signal; and
based on correction information for correcting uniformity of the display device being received from the electronic device, displaying a content based on the correction information.

13. The method of claim 12, further comprising:

storing the electronic device transmitting the first pattern image as an electronic device correcting image non-uniformity due to a vignetting phenomenon; and
based on the first pattern image being received from the electronic device, transmitting a signal indicating that the image non-uniformity due to the vignetting phenomenon of the electronic device is corrected based on the stored information to the electronic device or displaying a message indicating that the image non-uniformity due to the vignetting phenomenon of the electronic device is corrected.

14. A method of controlling an electronic device, comprising:

while a first pattern image is displayed on a display device, displaying a live image photographed by a camera of the electronic device;
sequentially moving and displaying a second pattern image corresponding to the first pattern image from a center area to a surrounding area of a display of the electronic device;
obtaining a luminance value of a preset point of the live image at a time point when the first pattern image included in the live image matches with each of the moved second pattern image as a position of the electronic device is changed; and
obtaining first correction information for correcting an image photographed by the camera based on the obtained luminance value and a position where the second pattern image is displayed.

15. The method of claim 14, wherein the obtaining the first correction information includes:
obtaining the first correction information based on the position where the second pattern image is displayed such that the obtained luminance value has the same value, and
wherein the control method comprises:
correcting a vignetting phenomenon of the image photographed by the camera based on the first correction information.

# FIG. 1

1000

100                                    200

| DISPLAY | ◄──────► | ELECTRONIC DEVICE |

# FIG. 2

<u>100</u>

# FIG. 3

200

230

210 — CAMERA ↔ PROCESSOR

220 — DISPLAY ↔

# FIG. 4

<u>200</u>

# FIG. 5

```
  ┌──────────────┐                              ┌──────────────┐
  │   DISPLAY    │~100                          │  ELECTRONIC  │~200
  │   DEVICE     │                              │   DEVICE     │
  └──────┬───────┘                              └──────┬───────┘
         │            CONNECTION BETWEEN DEVICES        │
  S510~  │◄────────────────────────────────────────────►│
         │                                              │
         │           TRANSMIT FIRST PATTERN IMAGE       │
  S515~  │◄─────────────────────────────────────────────│
```

| DISPLAY FIRST PATTERN IMAGE |~S520

~S525
| DISPLAY SECOND PATTERN IMAGE |

~S530
| PHOTOGRAPH |

~S535
| OBTAIN FIRST CORRECTION INFORMATION |

S540~
| DISPLAY IMAGE OF SINGLE COLOR |

~S545
| PHOTOGRAPH AND CORRECT |

~S550
| OBTAIN SECOND CORRECTION INFORMATION |

```
         │      TRANSMIT SECOND CORRECTION INFORMATION  │
  S555~  │◄─────────────────────────────────────────────│
  S560~  │                                              │
```

| CORRECT UNIFORMITY |

FIG. 6

# FIG. 7

| MEASUREMENT ORDER | DISTANCE RATIO | LUMINANCE VALUE (R+G+B) | LUMINANCE VALUE RATIO |
|---|---|---|---|
| 1 | 0 | 612 | 1 |
| 2 | 0.2 | 594 | 0.97 |
| 3 | 0.4 | 569 | 0.93 |
| 4 | 0.6 | 532 | 0.87 |
| 5 | 0.8 | 477 | 0.78 |

# FIG. 8

# FIG. 9

```
        ┌─────────────┐
        │    START    │
        └─────────────┘
               │
               ▼
┌───────────────────────────────────┐
│  IF FIRST PATTERN IMAGE IS RECEIVED FROM │
│  ELECTRONIC DEVICE, DISPLAY FIRST PATTERN │───S910
│             IMAGE                  │
└───────────────────────────────────┘
               │
               ▼
┌───────────────────────────────────┐
│    IF CONTROL SIGNAL IS RECEIVED FROM │
│  ELECTRONIC DEVICE, DISPLAY IMAGE OF SINGLE │───S920
│    COLOR BASED ON CONTROL SIGNAL   │
└───────────────────────────────────┘
               │
               ▼
┌───────────────────────────────────┐
│  IF CORRECTION INFORMATION FOR CORRECTING │
│  UNIFORMITY OF DISPLAY DEVICE IS RECEIVED │───S930
│  FROM ELECTRONIC DEVICE, DISPLAY CONTENT │
│    BASED ON CORRECTION INFORMATION │
└───────────────────────────────────┘
               │
               ▼
        ┌─────────────┐
        │     END     │
        └─────────────┘
```

# FIG. 10

```
                    ┌─────────────┐
                    │    START    │
                    └──────┬──────┘
                           │
                           ▼
    ┌──────────────────────────────────────────┐
    │  WHILE FIRST PATTERN IMAGE IS DISPLAYED ON │
    │      DISPLAY DEVICE, DISPLAY LIVE IMAGE    │──S1010
    │  PHOTOGRAPHED BY CAMERA OF ELECTRONIC DEVICE│
    └──────────────────┬───────────────────────┘
                       │
                       ▼
    ┌──────────────────────────────────────────┐
    │   SEQUENTIALLY MOVE AND DISPLAY SECOND PATTERN │
    │ IMAGE CORRESPONDING TO FIRST PATTERN IMAGE FROM │──S1020
    │  CENTER AREA TO SURROUNDING AREA OF DISPLAY │
    │           OF ELECTRONIC DEVICE             │
    └──────────────────┬───────────────────────┘
                       │
                       ▼
    ┌──────────────────────────────────────────┐
    │  OBTAIN LUMINANCE VALUE OF PRESET POINT OF LIVE │
    │   IMAGE AT TIME POINT WHEN FIRST PATTERN IMAGE │
    │    INCLUDED IN LIVE IMAGE MATCHES WITH EACH │──S1030
    │     OF MOVED SECOND PATTERN IMAGE AS POSITION │
    │        OF ELECTRONIC DEVICE IS CHANGED     │
    └──────────────────┬───────────────────────┘
                       │
                       ▼
    ┌──────────────────────────────────────────┐
    │ OBTAIN FIRST CORRECTION INFORMATION FOR CORRECTING │
    │   IMAGE PHOTOGRAPHED BY CAMERA BASED ON OBTAINED │──S1040
    │ LUMINANCE VALUE AND POSITION WHERE SECOND PATTERN │
    │           IMAGE IS DISPLAYED               │
    └──────────────────┬───────────────────────┘
                       │
                       ▼
                    ┌─────────────┐
                    │     END     │
                    └─────────────┘
```

## INTERNATIONAL SEARCH REPORT

| International application No. |
|---|
| **PCT/KR2023/011624** |

**A.    CLASSIFICATION OF SUBJECT MATTER**

**H04N 17/00**(2006.01)i; **H04N 23/70**(2023.01)i; **H04N 23/80**(2023.01)i; **G06T 5/00**(2006.01)i; **G09G 5/00**(2006.01)i

According to International Patent Classification (IPC) or to both national classification and IPC

**B.    FIELDS SEARCHED**

Minimum documentation searched (classification system followed by classification symbols)

H04N 17/00(2006.01); G06T 19/00(2011.01); G09G 3/00(2006.01); G09G 3/32(2006.01); G09G 3/34(2006.01); G09G 5/10(2006.01); H04N 23/10(2023.01); H04N 5/21(2006.01); H04N 9/69(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이(display), 균일성(uniformity), 비네팅(vignetting), 카메라 (camera), 휘도(luminance)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2018-0042030 A (SAMSUNG ELECTRONICS CO., LTD.) 25 April 2018 (2018-04-25)<br>See paragraphs [0004]-[0145]; and figure 5. | 1,12 |
| A | | 2-11,13-15 |
| Y | KR 10-2020-0025481 A (SAMSUNG ELECTRONICS CO., LTD.) 10 March 2020 (2020-03-10)<br>See paragraph [0016]. | 1,12 |
| A | KR 10-2018-0078713 A (SAMSUNG ELECTRONICS CO., LTD.) 10 July 2018 (2018-07-10)<br>See paragraphs [0005]-[0183]. | 1-15 |
| A | KR 10-2017-0041559 A (SAMSUNG ELECTRONICS CO., LTD.) 17 April 2017 (2017-04-17)<br>See paragraphs [0008]-[0088]. | 1-15 |
| A | US 2018-0342224 A1 (SAMSUNG ELECTRONICS CO., LTD.) 29 November 2018 (2018-11-29)<br>See paragraphs [0010]-[0112]. | 1-15 |

☐ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **30 November 2023** | **30 November 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

International application No.

**PCT/KR2023/011624**

| Patent document cited in search report | | | Publication date (day/month/year) | Patent family member(s) | | | Publication date (day/month/year) |
|---|---|---|---|---|---|---|---|
| KR | 10-2018-0042030 | A | 25 April 2018 | KR | 10-2524559 | B1 | 24 April 2023 |
| KR | 10-2020-0025481 | A | 10 March 2020 | EP | 3618051 | A1 | 04 March 2020 |
| | | | | KR | 10-2558290 | B1 | 24 July 2023 |
| | | | | US | 10904504 | B2 | 26 January 2021 |
| | | | | US | 10939083 | B2 | 02 March 2021 |
| | | | | US | 2020-0077068 | A1 | 05 March 2020 |
| | | | | WO | 2020-045834 | A1 | 05 March 2020 |
| KR | 10-2018-0078713 | A | 10 July 2018 | CN | 109891484 | A | 14 June 2019 |
| | | | | CN | 109891484 | B | 25 July 2023 |
| | | | | EP | 3494571 | A1 | 12 June 2019 |
| | | | | KR | 10-2545813 | B1 | 21 June 2023 |
| | | | | US | 10504461 | B2 | 10 December 2019 |
| | | | | US | 2018-0190214 | A1 | 05 July 2018 |
| | | | | WO | 2018-124784 | A1 | 05 July 2018 |
| KR | 10-2017-0041559 | A | 17 April 2017 | KR | 10-2401951 | B1 | 26 May 2022 |
| | | | | US | 10708533 | B2 | 07 July 2020 |
| | | | | US | 2018-0295312 | A1 | 11 October 2018 |
| | | | | WO | 2017-061691 | A1 | 13 April 2017 |
| US | 2018-0342224 | A1 | 29 November 2018 | KR | 10-2017-0035527 | A | 31 March 2017 |
| | | | | KR | 10-2468270 | B1 | 18 November 2022 |
| | | | | WO | 2017-052102 | A1 | 30 March 2017 |

Form PCT/ISA/210 (patent family annex) (July 2022)